# EUROPEAN PATENT SPECIFICATION

(11) **EP 3 106 639 B1**
(45) Date of publication and mention of the grant of the patent: **28.02.2018**
(21) Application number: 16174960.1
(22) Date of filing: 17.06.2016
(51) Int. Cl.: F01N 3/20

(54) **REDUCTANT SUPPLY SYSTEM**
REDUKTIONSMITTELVERSORGUNGSSYSTEM
SYSTÈME D'ALIMENTATION EN AGENT RÉDUCTEUR

(30) Priority: 19.06.2015 JP 2015123945
(43) Date of publication of application: 21.12.2016
(73) Proprietor: Toyota Jidosha Kabushiki Kaisha, Toyota-shi, Aichi-ken, 471-8571 (JP)
(72) Inventor: OTA, Hirohiko, Toyota-shi, Aichi-ken, 471-8571 (JP)
(74) Representative: Intès, Didier Gérard André

(56) References cited:
- JP-A- 2012 127 214
- US-A1- 2014 305 100
- US-B2- 8 307 636

## Description

### BACKGROUND OF THE INVENTION

### 1. Field of the Invention

The invention relates to a reductant supply system.

### 2. Description of Related Art

Some internal combustion engines mounted in vehicles are provided with a selective catalytic reduction (SCR) NOx control catalyst disposed in an exhaust passage. Such an internal combustion engine is provided with a reductant supply system that supplies a reductant to a portion of the exhaust passage upstream of the NOx control catalyst to reduce NOx in the exhaust gas with the use of the NOx control catalyst, thereby removing NOx from the exhaust gas.

Japanese Patent Application Publication No. 2012-127214 (JP 2012-127214 A) describes a reductant supply system including an injection valve and a pump. The injection valve injects a reductant to a portion of an exhaust passage upstream of a NOx control catalyst. The pump supplies the reductant from a tank to the injection valve or draws the reductant back into the tank from the injection valve. Further, the reductant supply system executes purge control in response to the issuance of a command to stop an internal combustion engine. In the purge control, the reductant is drawn back into the tank from the injection valve by operating the pump with the injection valve kept open, in order to avoid the situation where the components of the reductant in the injection valve are coagulated by the heat from the internal combustion engine (i.e., the heat from the exhaust passage).

According to JP 2012-127214 A, at the time of the startup of the internal combustion engine, the pressure in a reductant supply passage leading to the injection valve is raised and then the air or reductant is injected from an injection hole by opening and closing the injection valve, in order to blow off deposits accumulated on the periphery of the injection hole of the injection valve.

US 2014/0305100 discloses a method for preventing clogging of a urea injection nozzle in an after-run operation of a selective catalytic reduction (SCR) system which supplies urea stored in a urea tank through a supply module, a urea injection nozzle and a urea line connecting the supply module and the urea injection nozzle, the method comprising an emptying step where the urea is withdrawn into the urea tank by creating negative pressure in the supply module.

### SUMMARY OF THE INVENTION

When the purge control is executed in response to the issuance of a command to stop the internal combustion engine, the deposits accumulated on the periphery of the injection hole of the injection valve are also drawn into the injection hole as the reductant is drawn back into the tank from the injection valve. The deposits drawn into the injection hole cause clogging of the injection hole. During a period from the stop of the internal combustion engine until the next startup of the internal combustion engine, solidification of the deposits in the injection hole of the injection valve progresses. In this case, even when the air or reductant is injected from the injection hole of the injection valve as described above at the time of the startup of the internal combustion engine, the injection may fail to completely blow off the deposits in the injection hole and thus clogging of the injection hole will not be completely eliminated.

The invention provides a reductant supply system according to the wording of claim 1 configured to prevent clogging of an injection hole of an injection valve due to progress of solidification of deposits drawn into the injection hole after the issuance of a command to stop the internal combustion engine.

A reductant supply system according to an aspect includes an injection valve and a pump. The injection valve is configured such that an injection hole is opened and closed by a valve element in the form of a needle to inject a reductant into an exhaust passage of an internal combustion engine. The pump is configured to supply the reductant to the injection valve, and to draw the reductant back from the injection valve. The reductant supply system is configured to execute purge control of drawing the reductant back from the injection valve by operating the pump in response to the issuance of a command to stop the internal combustion engine. As the reductant is drawn back from the injection valve through the purge control, deposits accumulated on the periphery of the injection hole of the injection valve are drawn into the injection hole, and thus, the deposits cause clogging of the injection hole.

In order to prevent the injection hole from being clogged with the deposits, the reductant supply system includes a control unit, a calculation unit, and a setting unit. The control unit operates the valve element such that closing-and-opening of the injection hole of the injection valve is performed the prescribed number of times after the command to stop the internal combustion engine is issued. The calculation unit calculates an amount of substance generated during an operation of the internal combustion engine. The substance causes accumulation of deposits on the periphery of the injection hole of the injection valve. The setting unit sets the number of times that the closing-and-opening of the injection hole of the injection valve is performed by the valve element under the control of the control unit, to be larger as the amount of generated substance calculated when the command to stop the internal combustion engine is issued is larger.

With the reductant supply system, as a larger amount of substances causing accumulation of deposits on the periphery of the injection hole of the injection valve is generated during an operation of the internal combustion engine, that is, as a larger amount of deposits is drawn into the injection hole while the purge control is executed, the number of times that the closing-and-opening of the injection hole is performed by the valve element of the injection valve under the control of the control unit after the command to stop the internal combustion engine is issued is set to be larger. The deposits drawn into the injection hole through the execution of the purge control are cut up through the motion of the valve element before the deposits are solidified in the injection hole. Thus, it is possible to avoid the situation where the injection hole of the injection valve is clogged due to progress of solidification of the deposits drawn into the injection hole of the injection valve after the command to stop the internal combustion engine is issued.

The reductant supply system may further include a determination unit configured to determine whether a user is in a vehicle cabin of a vehicle in which the internal combustion engine is mounted. Further, the control unit and the setting unit may be configured as follows: The control unit is configured to perform the closing-and-opening of the injection hole by the valve element the prescribed number of times, by repeatedly performing an operation in which the injection hole is opened by the valve element after a period of time corresponding to a closing-to-opening interval elapses after the injection hole is closed by the valve element. The setting unit is configured to set the closing-to-opening interval in addition to setting the number of times that the closing-and-opening of the injection hole is performed by the valve element. The setting unit is configured to set the closing-to-opening interval to be longer when the determination unit determines that the user is not in the vehicle cabin of the vehicle than when the determination unit determines that the user is in the vehicle cabin of the vehicle.

The vehicle cabin of the vehicle is in an environment under which noise from the outside is less likely to be heard. Thus, when the user is in the vehicle cabin, the user is less likely to feel uncomfortable even when noise is generated due to the closing-and-opening of the injection hole of the injection valve performed by the valve element under the control of the control unit. On the other hand, when the user has gotten out of the vehicle cabin, the user is likely to feel uncomfortable due to the noise. With the configuration described above, the closing-to-opening interval is set to be longer when the user is not in the vehicle cabin than when the user is in the vehicle cabin. As a result, when the closing-and-opening of the injection hole of the injection valve is performed by the valve element under the control of the control unit, the period of time from closing of the injection hole by the valve element until opening of the injection hole becomes longer. Consequently, it is possible to reduce noise due to the closing-and-opening of the injection hole of the injection valve performed by the valve element under the control of the control unit. Thus, the user who has gotten out of the vehicle cabin is less likely to feel uncomfortable due to the noise.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an overall schematic view of an internal combustion engine provided with a reductant supply system;
FIG. 2 is a sectional view schematically illustrating an injection hole and a valve element of an injection valve provided in the reductant supply system and their vicinity;
FIG. 3 is a flowchart illustrating the executing procedure and ending procedure of purge control;
FIG. 4 is a flowchart illustrating the procedure of executing a deposit removal process;
FIG. 5 is a map for calculating the number of times that the closing-and-opening of the injection hole of the injection valve is performed in the deposit removal process;
FIG. 6 is a flowchart illustrating the procedure of ending the deposit removal process; and
FIG. 7 is a flowchart illustrating the procedure of executing a deposit removal process.

### DETAILED DESCRIPTION OF EMBODIMENTS

### First Embodiment

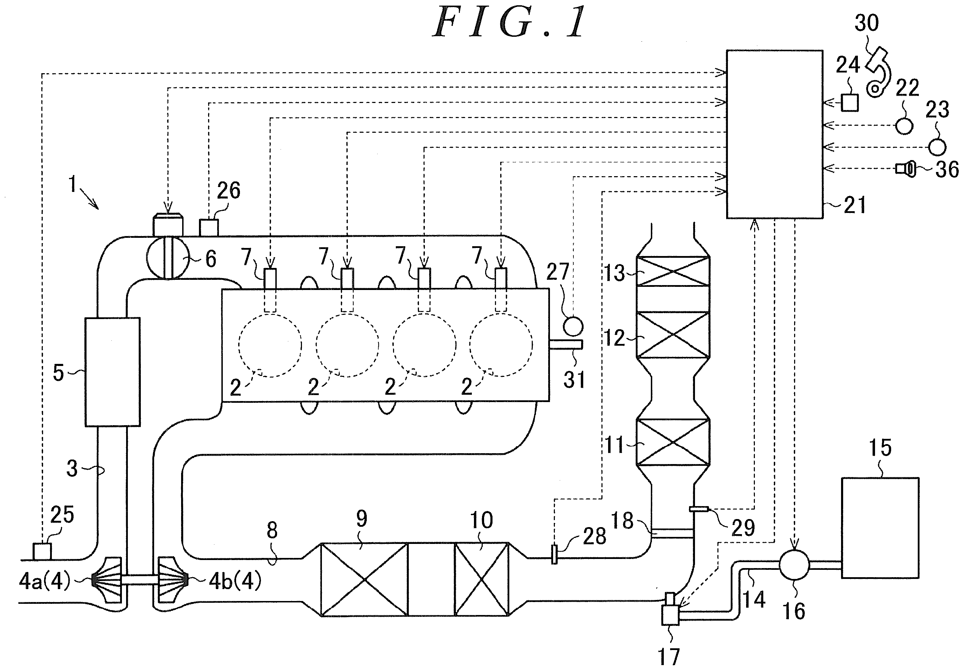

Hereinafter, a first embodiment of a reductant supply system will be described with reference to FIG. 1 to FIG. 6. As illustrated in FIG. 1, an intake passage 3 is connected to combustion chambers 2 of an internal combustion engine 1 mounted in a vehicle. In the intake passage 3, a compressor wheel 4a of a turbocharger 4, an intercooler 5, and an intake throttle valve 6 are provided in this order from the upstream side. Air that has passed through the intake passage 3 is taken into the combustion chambers 2 of the internal combustion engine 1, and fuel is injected into the combustion chambers 2 from fuel injection valves 7. The fuel is burned in the combustion chambers 2, so that the internal combustion engine 1 is driven. On the other hand, exhaust gas produced as a result of the combustion of fuel in the combustion chambers 2 is sent out to an exhaust passage 8 connected to the combustion chambers 2. In the exhaust passage 8, a turbine wheel 4b of the turbocharger 4, a first oxidation catalyst 9, a filter 10, a first NOx control catalyst 11, a second NOx control catalyst 12, and a second oxidation catalyst 13 are provided in this order from the upstream side.

The first oxidation catalyst 9 oxidizes carbon monoxide (CO) and hydrocarbon (HC), thereby removing CO and HC. The filter 10 traps particulate matter (PM) in the exhaust gas. The first NOx control catalyst 11 and the second NOx control catalyst 12 are selective catalytic reduction (SCR) catalysts that reduce NOx in the exhaust gas with a reductant, thereby removing NOx from the exhaust gas. Specifically, when a reductant, such as a urea aqueous solution, is added to the exhaust gas present in a portion of the exhaust passage 8 upstream of the first NOx control catalyst 11 (a portion of the exhaust passage 8, the portion being upstream of the first NOx control catalyst 11), the urea aqueous solution is hydrolyzed due to the heat of the exhaust gas and ammonia (NH₃) is generated. The generated ammonia is stored in the first NOx control catalyst 11 and the second NOx control catalyst 12, so that NOx is reduced in the first NOx control catalyst 11 and the second NOx control catalyst 12. Through the reduction, NOx in the exhaust gas is removed. The second oxidation catalyst 13 processes the ammonia flowing downstream from the second NOx control catalyst 12 by oxidizing the ammonia.

The internal combustion engine 1 is provided with the reductant supply system that supplies the reductant (urea aqueous solution) to a portion of the exhaust passage 8 upstream of the first NOx control catalyst 11. The reductant supply system includes an injection valve 17 that injects the urea aqueous solution into a portion of the exhaust passage 8 upstream of the first NOx control catalyst 11 and downstream of the filter 10. The urea aqueous solution added to the exhaust gas in the exhaust passage 8 by the injection valve 17 is dispersed to be atomized by a dispersion plate 18 provided at a position downstream of the injection valve 17 and upstream of the first NOx control catalyst 11. The reductant supply system further includes a pump 16 connected to the injection valve 17 through a pipe 14, and a tank 15 that is connected to the pump 16 and that stores the urea aqueous solution. The pump 16 draws the urea aqueous solution from the tank 15 by rotating in the forward direction, thereby supplying the urea aqueous solution to the pipe 14 and the injection valve 17. On the other hand, the pump 16 draws the urea aqueous solution back into the tank 15 from the injection valve 17 and the pipe 14 by rotating in the reverse direction.

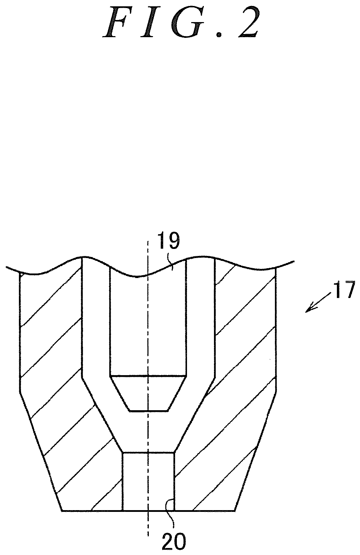

As illustrated in FIG. 2, the injection valve 17 is configured such that an injection hole 20 is opened and closed by a valve element 19 in the form of a needle, so that the urea aqueous solution is injected from the injection hole 20 and the injection stops. The valve element 19 of the injection valve 17 is able to reciprocate in its axial direction (up-down direction in FIG. 2). The valve element 19 makes a closing motion of closing the injection hole 20 by moving in a direction toward the injection hole 20, or makes an opening motion of opening the injection hole 20 by moving in a direction away from the injection hole 20. When the injection hole 20 is opened through the opening motion of the valve element 19, the urea aqueous solution is injected from the injection hole 20. On the other hand, when the injection hole 20 is closed by the valve element 19 through the closing motion of the valve element 19, the injection of the urea aqueous solution from the injection hole 20 stops.

As illustrated in FIG. 1, the reductant supply system includes an electronic control unit 21 that executes various controls of the internal combustion engine 1. The electronic control unit 21 includes, for example, a central processing unit (CPU), read-only memory (ROM), random-access memory (RAM), an input port, and an output port. The CPU executes computations related to the various controls. The ROM stores programs and data required for the controls. The RAM temporarily stores, for example, the results of computations executed by the CPU. The input port receives signals from external devices. The output port outputs signals to external devices.

Various sensors and the like, which will be described below, are connected to the input port of the electronic control unit 21. The various sensors and the like include a vehicle speed sensor 22 and a door sensor 23. The vehicle speed sensor 22 detects a travelling speed (vehicle speed) of the vehicle. The door sensor 23 detects opening and closing of a door of the vehicle.

The various sensors and the like include an ignition switch 36 and an accelerator position sensor 24. The ignition switch 36 is operated when the internal combustion engine 1 is started through a manual operation by a driver (user) or when the internal combustion engine 1 is stopped through a manual operation by the driver (user). The accelerator position sensor 24 detects an operation amount (accelerator operation amount) of an accelerator pedal 30 operated by the driver (user) of the vehicle.

The various sensors and the like include an airflow meter 25 and an intake pressure sensor 26. The airflow meter 25 detects an amount of air flowing through the intake passage 3. The intake pressure sensor 26 detects a pressure (intake pressure) in the intake passage 3, at a position downstream of the intake throttle valve 6.

The various sensors and the like include a crank position sensor 27 and an exhaust gas temperature sensor 28. The crank position sensor 27 detects a rotary speed of a crank shaft 31 of the internal combustion engine 1. The exhaust gas temperature sensor 28 detects a temperature of the exhaust gas in the exhaust passage 8, at a position downstream of the filter 10.

The various sensors and the like include a NOx sensor 29 that detects an amount of NOx in the exhaust gas present in a portion of the exhaust passage 8 upstream of the first NOx control catalyst 11. A drive circuit for the fuel injection valve 7, a drive circuit for the intake throttle valve 6, a drive circuit for the pump 16, a drive circuit for the injection valve 17, and the like are connected to the output port of the electronic control unit 21.

The electronic control unit 21 determines the operation state of the internal combustion engine 1 based on detection signals from the various sensors. The electronic control unit 21 then outputs command signals to the various drive circuits connected to the output port based on the determined operation state of the internal combustion engine 1. In this manner, fuel injection control in the internal combustion engine 1, opening degree control of the intake throttle valve 6, drive control of the pump 16, drive control of the injection valve 17, and the like are executed by the electronic control unit 21.

In response to the issuance of a command to stop the internal combustion engine 1, the electronic control unit 21 executes purge control of drawing the urea aqueous solution from the pipe 14 and the injection valve 17 back into the tank 15. By drawing the urea aqueous solution from the injection valve 17 back into the tank 15 through the purge control, it is possible to avoid the situation where the components of the urea aqueous solution in the injection valve 17 are coagulated by the heat from the internal combustion engine 1 (i.e., the heat from the exhaust passage 8) after the internal combustion engine 1 stops.

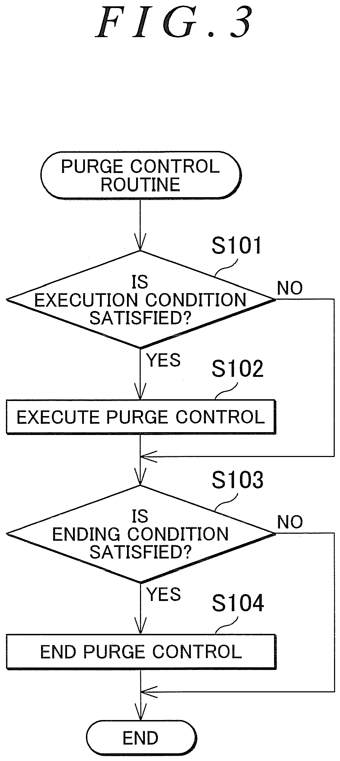

FIG. 3 is a flowchart illustrating a purge control routine for executing and ending the purge control. The electronic control unit 21 periodically executes the purge control routine, as a timer interrupt, for example, at prescribed time intervals.

As a process in Step 101 (S101) of the routine, the electronic control unit 21 determines whether a condition for executing the purge control is satisfied. An example of the condition for executing the purge control is a condition that a command to stop the internal combustion engine 1 is issued in response to an operation of turning off the ignition switch 36. When a command to stop the internal combustion engine 1 is issued in response to an operation of turning off the ignition switch 36, an affirmative determination is made in S101 and the electronic control unit 21 proceeds to S102. On the other hand, when a negative determination is made in S101, the electronic control unit 21 proceeds to S103.

As a process in S102, the electronic control unit 21 executes the purge control of drawing the urea aqueous solution from the pipe 14 and the injection valve 17 back into the tank 15 by rotating the pump 16 in the reverse direction in a state where the injection hole 20 of the injection valve 17 is opened through the opening motion of the valve element 19. Then, the electronic control unit 21 proceeds to S103.

As a process in S103, the electronic control unit 21 determines whether a condition for ending the purge control is satisfied. An example of the condition for ending the purge control is a condition that the time required to draw the urea aqueous solution from the pipe 14 and the injection valve 17 back into the tank 15 has elapsed after the purge control starts. When the above-described time has elapsed, an affirmative determination is made in S103 and the electronic control unit 21 proceeds to S104. On the other hand, when a negative determination is made in S103, the electronic control unit 21 ends the purge control routine.

As a process in S104, the electronic control unit 21 ends the purge control of drawing the urea aqueous solution from the pipe 14 and the injection valve 17 back into the tank 15, by closing the injection hole 20 of the injection valve 17 through the closing motion of the valve element 19 and stopping the reverse rotation of the pump 16. Then, the electronic control unit 21 ends the purge control routine.

While the internal combustion engine 1 is operating, deposits are accumulated on the periphery of the injection hole 20 of the injection valve 17. Such accumulation of the deposits occurs due to substances, such as smoke (black smoke) in the exhaust gas from the internal combustion engine 1 and the urea aqueous solution. As a larger amount of above-described substances is generated during the operation of the internal combustion engine 1, a larger amount of deposits has been accumulated on the periphery of the injection hole 20 of the injection valve 17 when a command to stop the internal combustion engine 1 is issued. The deposits accumulated on the periphery of the injection hole 20 are drawn into the injection hole 20 as the urea aqueous solution is drawn back from the injection valve 17 when the purge control is executed in response to the issuance of a command to stop the internal combustion engine 1. As a result, the deposits cause clogging of the injection hole 20. If the deposits are left in the injection hole 20 of the injection valve 17 during a period from the stop of the internal combustion engine 1 until the next startup of the internal combustion engine 1, solidification of the deposits progresses. As a result, it becomes difficult to remove the deposits from the injection hole 20.

In order to avoid such a problem, a deposit removal process is executed as soon as possible after a command to stop the internal combustion engine 1 is issued. In the deposit removal process, the deposits drawn into the injection hole 20 of the injection valve 17 due to the purge control are removed by cutting up the deposits through the closing-and-opening of the injection hole 20 caused by the motion of the valve element 19.

The deposit removal process is carried out by causing the valve element 19 to make a closing motion and an opening motion such that the closing-and-opening of the injection hole 20 of the injection valve 17 is performed the prescribed number of times (the number Tsq of times of the closing-and-opening) (hereinafter, referred to as "the prescribed number Tsq of times" where appropriate) under the control of the electronic control unit 21. In this case, the electronic control unit 21 serves as a control unit that operates the valve element 19 of the injection valve 17 such that the closing-and-opening of the injection hole 20 is performed the prescribed number Tsq of times. The closing-and-opening of the injection hole 20 is performed the prescribed number Tsq of times, by repeatedly performing an operation in which the valve element 19 closes the injection hole 20 and the valve element 19 opens the injection hole 20 after a prescribed period of time corresponding to a closing-to-opening interval Tα has elapsed since the injection hole 20 is closed.

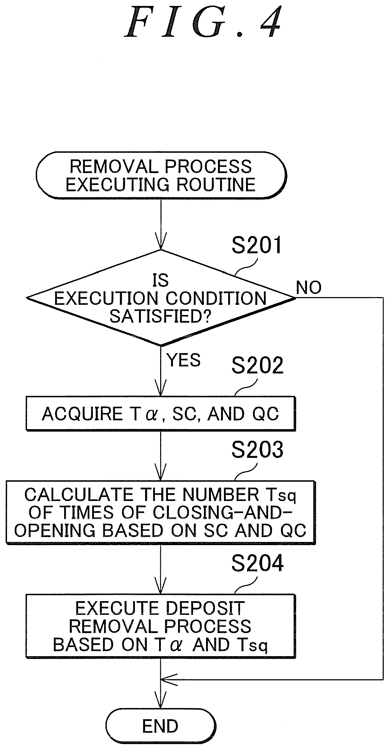

FIG. 4 is a flowchart illustrating a removal process executing routine for executing the deposit removal process. The electronic control unit 21 periodically executes the removal process executing routine, as a timer interrupt, for example, at prescribed time intervals.

As a process in S201 of the removal process executing routine, the electronic control unit 21 determines whether a condition for executing the deposit removal process is satisfied. An example of the condition for executing the deposit removal process is a condition that a command to stop the internal combustion engine 1 is issued in response to an operation of turning off the ignition switch 36 and the purge control is being executed. When a command to stop the internal combustion engine 1 is issued in response to an operation of turning off the ignition switch 36 and the purge control is being executed, an affirmative determination is made in S201, and the electronic control unit 21 proceeds to S202. On the other hand, when a negative determination is made in S201, the electronic control unit 21 ends the removal process executing routine.

As a process in S202, the electronic control unit 21 acquires the closing-to-opening interval Tα stored in the nonvolatile RAM of the electronic control unit 21, and the electronic control unit 21 also acquires a smoke cumulative value SC and a urea aqueous solution cumulative value QC that are calculated through other routines. As the closing-to-opening interval Tα, a fixed value optimally set in advance through, for example, an experiment is employed in the present embodiment.

The smoke cumulative value SC is the total amount of smoke generated during the current operation of the internal combustion engine 1. The smoke cumulative value SC is acquired as follows: each time a prescribed period of time has elapsed, the amount of smoke generated during the prescribed period of time is calculated through another routine executed by the electronic control unit 21. The smoke cumulative value SC is obtained by accumulating the amounts of smoke calculated as described above. The amount of smoke generated during the prescribed period of time is calculated based on the engine speed and the engine load, with reference to a map that is set in advance through, for example, an experiment. The engine speed used in this case can be detected by the crank position sensor 27, and the engine load can be obtained based on the amount of fuel injected from the fuel injection valve 7 during one cycle of the internal combustion engine 1.

The urea aqueous solution cumulative value QC is the total amount of urea aqueous solution added to the exhaust gas from the injection valve 17 during the current operation of the internal combustion engine 1. The urea aqueous solution cumulative value QC is acquired as follows: each time a prescribed period of time has elapsed, the amount (corresponding to a required addition amount) of urea aqueous solution added to the exhaust gas from the injection valve 17 during the prescribed period of time is calculated through another routine executed by the electronic control unit 21. The urea aqueous solution cumulative value QC is obtained by accumulating the amounts of urea aqueous solution calculated as described above. The required addition amount is a value used in the drive control of the injection valve 17 executed by the electronic control unit 21. The required addition amount is obtained, as a required value of the amount of urea aqueous solution injected from the injection valve 17, based on the operation states of the internal combustion engine 1, such as the engine speed and the engine load. While the internal combustion engine 1 is operating, the drive control of the injection valve 17 is executed by the electronic control unit 21 such that the reductant in the required addition amount is injected from the injection valve 17.

As described above, when calculating the smoke cumulative value SC and the urea aqueous solution cumulative value QC, the electronic control unit 21 serves as a calculation unit that calculates the amount of substances (smoke, urea aqueous solution, and the like) that cause accumulation of deposits on the periphery of the injection hole 20 of the injection valve 17 and that are generated during the operation of the internal combustion engine 1.

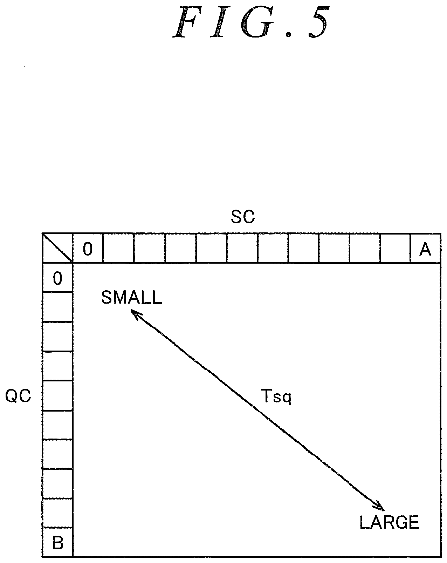

A process in S203 of the removal process executing routine is executed to set the number of times that the closing-and-opening of the injection hole 20 is performed through the closing motion and the opening motion of the valve element 19 in the deposit removal process. As the process in S203, the electronic control unit 21 calculates the number Tsq of times of the closing-and-opening based on the smoke cumulative value SC and the urea aqueous solution cumulative value QC with reference to a two-dimensional map illustrated in FIG. 5. As can be seen from FIG. 5, the number Tsq of times of the closing-and-opening calculated as described above becomes larger as the smoke cumulative value SC becomes larger, and the number Tsq of times of the closing-and-opening calculated as described above becomes larger as the urea aqueous solution cumulative value QC becomes larger. The electronic control unit 21 sets the calculated number Tsq of times of the closing-and-opening as the number of times that the closing-and-opening of the injection hole is performed in the deposit removal process. In this case, the electronic control unit 21 serves as a setting unit that sets the number of times of the closing-and-opening.

Then, as a process in S204, the electronic control unit 21 executes the deposit removal process based on the closing-to-opening interval Tα and the number Tsq of times of the closing-and-opening. In other words, through the use of the valve element 19 of the injection valve 17, the closing-and-opening of the injection hole 20 is performed the prescribed number Tsq of times at the closing-to-opening interval Tα. After S204 is executed, the electronic control unit 21 ends the removal process executing routine.

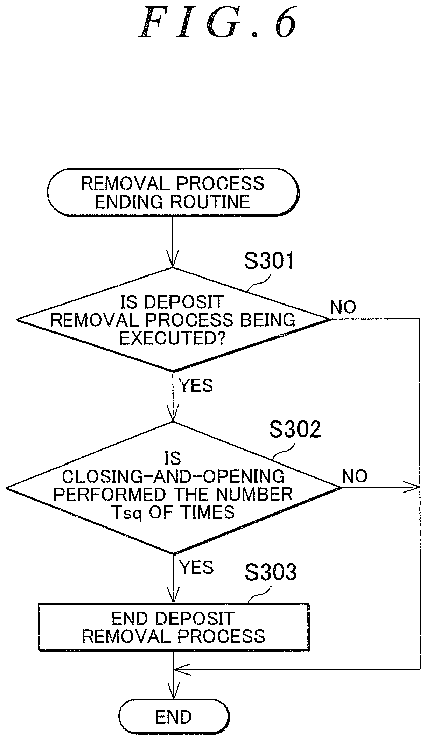

FIG. 6 is a flowchart illustrating a removal process ending routine for ending the deposit removal process. The electronic control unit 21 periodically executes the removal process ending routine, as a timer interrupt, for example, at prescribed time intervals.

As a process in S301 of the removal process ending routine, the electronic control unit 21 determines whether the deposit removal process is being executed. When a negative determination is made in S301, the electronic control unit 21 ends the removal process ending routine. On the other hand, when the deposit removal process is being executed, the electronic control unit 21 proceeds to S302. A process in S302 is executed in order to determine whether a condition for ending the deposit removal process is satisfied.

As the process in S302, the electronic control unit 21 determines whether the closing-and-opening of the injection hole 20 is performed, through the use of the valve element 19 of the injection valve 17, the prescribed number Tsq of times in the deposit removal process. When a negative determination is made in S302, the electronic control unit 21 ends the removal process ending routine. On the other hand, when an affirmative determination is made in S302, the electronic control unit 21 proceeds to S303. As a process in S303, the electronic control unit 21 ends the deposit removal process. Then, the electronic control unit 21 ends the removal process ending routine.

As can be seen from the removal process ending routine, the period of time from the start of the deposit removal process until the end of the deposit removal process is determined based on the closing-to-opening interval Tα and the number Tsq of times of the closing-and-opening. The closing-to-opening interval Tα and the number Tsq of times of the closing-and-opening are set through the processes in S202 and S203 (FIG. 3) of the removal process executing routine, such that the period of time from the start of the deposit removal process until the end of the deposit removal process is shorter than the period of time for executing the purge control.

Next, the operation of the reductant supply system will be described. While the purge control is executed in response to the issuance of a command to stop the internal combustion engine 1, the urea aqueous solution is drawn from the injection valve 17 back into the tank 15, and the deposits accumulated on the periphery of the injection hole 20 of the injection valve 17 are also drawn into the injection hole 20. The deposits drawn into the injection hole 20 cause clogging of the injection hole 20.

Examples of the substances that cause accumulation of deposits on the periphery of the injection hole 20 of the injection valve 17 during the operation of the internal combustion engine 1 include smoke in the exhaust gas and the urea aqueous solution added to the exhaust gas from the injection valve 17. The smoke and the urea aqueous solution in the exhaust gas are mixed with each other to form deposits, and the deposits are accumulated on the periphery of the injection hole 20 of the injection valve 17. Therefore, as the smoke cumulative value SC, which indicates the total amount of smoke generated during the operation of the internal combustion engine 1, becomes larger, and as the urea aqueous solution cumulative value QC, which indicates the total amount of urea aqueous solution added to the exhaust gas from the injection valve 17 during the operation of the internal combustion engine 1, becomes larger, a larger amount of deposits is accumulated on the periphery of the injection hole 20 of the injection valve 17, and thus a larger amount of deposits is drawn into the injection hole 20 while the purge control is executed.

In order to prevent the injection hole 20 from being clogged with the deposits drawn into the injection hole 20 while the purge control is executed, the deposit removal process of closing and opening the injection hole 20 with the use of the valve element 19 is executed to cut up the deposits, thereby removing the deposits. The deposit removal process is executed after a command to stop the internal combustion engine 1 is issued and the purge control is started. In the deposit removal process, the number of times that the closing-and-opening of the injection hole 20 is performed by the valve element 19 of the injection valve 17 (the number Tsq of times of the closing-and-opening) is larger as a larger amount of substances that cause accumulation of deposits on the periphery of the injection hole 20 of the injection valve 17 is generated while the internal combustion engine 1 is operating before the issuance of the command to stop the internal combustion engine 1. More specifically, as the smoke cumulative value SC and the urea aqueous solution cumulative value QC become larger, that is, as a larger amount of deposits is drawn into the injection hole 20 while the purge control is executed, the number Tsq of times of the closing-and-opening is set to a larger value.

Through the closing motion and opening motion of the valve element 19 for performing the closing-and-opening of the injection hole 20 the prescribed number Tsq of times in the deposit removal process, the deposits drawn into the injection hole 20 due to the purge control are cut up before the deposits are solidified. Thus, it is possible to avoid the situation where the injection hole 20 of the injection valve 17 is clogged due to progress of solidification of the deposits drawn into the injection hole 20 of the injection valve 17 after the command to stop the internal combustion engine 1 is issued.

The present embodiment described above in detail produces the following advantageous effects (1) and (2). (1) Even when the deposits are drawn into the injection hole 20 of the injection valve 17 while the purge control is executed in response to the issuance of a command to stop the internal combustion engine 1, the deposits are cut up through the closing and opening motions of the valve element 19 in the deposit removal process. Thus, solidification of the deposits drawn into the injection hole 20 is prevented from progressing. Consequently, the situation where the injection hole 20 is clogged with the solidified deposits is less likely to occur.

(2) The closing-and-opening of the injection hole 20 is performed by the valve element 19 in order to cut up the deposits drawn into the injection hole 20. The closing-and-opening of the injection hole 20 is performed after a command to stop the internal combustion engine 1 is issued and the purge control is started. In other words, while the purge control is executed, the closing-and-opening of the injection hole 20 is performed by the valve element 19 through the deposit removal process. Thus, it is possible to avoid the situation where the urea aqueous solution remaining in the injection valve 17 leaks into the exhaust passage 8 from the injection hole 20 when the closing-and-opening of the injection hole 20 is performed by the valve element 19. Consequently, the situation where the deposits are accumulated on the periphery of the injection hole 20 due to the leakage of the urea aqueous solution is less likely to occur.

### Second Embodiment

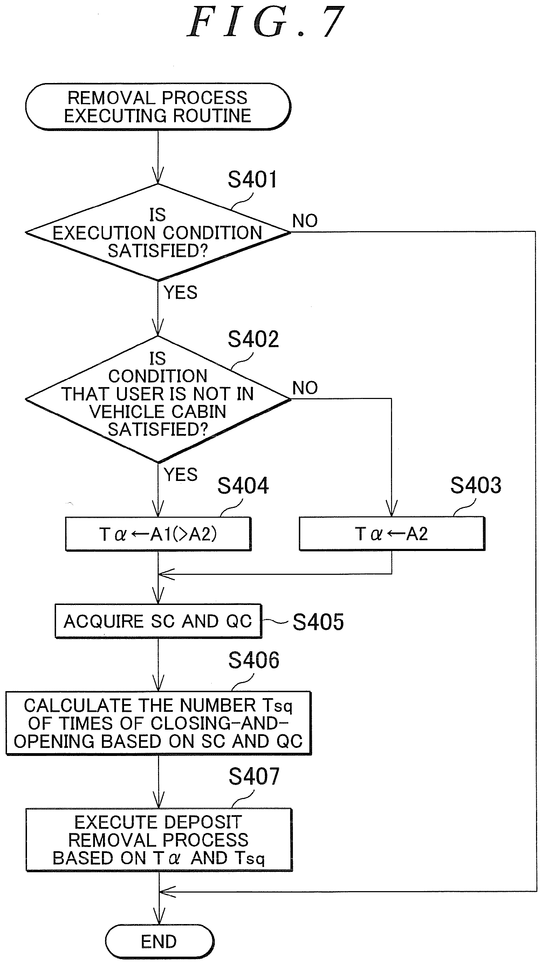

Next, a second embodiment of a reductant supply system will be described with reference to FIG. 7. In the present embodiment, a closing-to-opening interval Tα is variably set depending on whether a user is in a vehicle cabin of the vehicle, instead of using a fixed value as the closing-to-opening interval Tα for the deposit removal control as in the first embodiment. Specifically, the closing-to-opening interval Tα is set longer when it is determined that a user is not in the vehicle cabin, than when it is determined that the user is in the vehicle cabin.

FIG. 7 is a flowchart illustrating a removal process executing routine according to the present embodiment. The electronic control unit 21 periodically executes the removal process executing routine, as a timer interrupt, for example, at prescribed time intervals. The removal process executing routine in the present embodiment differs from that in the first embodiment, in a process (S405) corresponding to S202 in the removal process executing routine (FIG. 4) in the first embodiment. Further, the removal process executing routine in the present embodiment includes processes in S402 to S404 that are not included in the removal process executing routine in the first embodiment.

As a process in S401 of the removal process executing routine illustrated in FIG. 7, the electronic control unit 21 determines whether a condition for executing the deposit removal process is satisfied. When a negative determination is made in S401, the electronic control unit 21 ends the removal process executing routine. On the other hand, when an affirmative determination is made in S401, and the electronic control unit 21 proceeds to S402.

As a process in S402, the electronic control unit 21 determines whether the condition that a user is not in the vehicle cabin is satisfied. Such a determination is made, for example, based on whether a door of the vehicle is opened after a command to stop the internal combustion engine 1 is issued. More specifically, when the door sensor 23 detects opening of the door of the vehicle after a command to stop the internal combustion engine 1 is issued, the electronic control unit 21 determines that the user is not in the vehicle cabin (the user has gotten out of the vehicle cabin). On the other hand, when the door sensor 23 has not detected opening of the door of the vehicle after a command to stop the internal combustion engine 1 is issued, the electronic control unit 21 determines that the user is in the vehicle cabin (the user has not gotten out of the vehicle cabin).

When a negative determination is made in S402 (i.e., when the user is in the vehicle cabin), the electronic control unit 21 proceeds to S403. As a process in S403, the electronic control unit 21 sets the closing-to-opening interval Tα to a prescribed value A2 (e.g., a value equal to the closing-to-opening interval Tα in the first embodiment). On the other hand, when an affirmative determination is made in S402 (i.e., when the user is not in the vehicle cabin), the electronic control unit 21 proceeds to S404. As a process in S404, the electronic control unit 21 sets the closing-to-opening interval Tα to a prescribed value A1 that is longer than the prescribed value A2. A value optimally set in advance through, for example, an experiment may be used as the prescribed value A1. After the process in S403 or the process in S404 is executed, the electronic control unit 21 proceeds to S405.

As a process in S405, the electronic control unit 21 acquires the smoke cumulative value SC and the urea aqueous solution cumulative value QC. Then, the electronic control unit 21 proceeds to S406 and S407 (corresponding respectively to S203 and S204 in the first embodiment). As a process in S406, the electronic control unit 21 calculates the number Tsq of times of the closing-and-opening, based on the smoke cumulative value SC and the urea aqueous solution cumulative value QC. Then, as a process in S407, the electronic control unit 21 executes the deposit removal process based on the closing-to-opening interval Tα (the prescribed value A1 or the prescribed value A2) and the number Tsq of times of the closing-and-opening.

The present embodiment produces the following advantageous effect (3) in addition to the advantageous effects (1) and (2) in the first embodiment. (3) The vehicle cabin is in an environment under which noise from the outside is less likely to be heard. Thus, when a user is in the vehicle cabin, the user is less likely to feel uncomfortable even when noise is generated due to the closing-and-opening of the injection hole 20 of the injection valve 17 performed by the valve element 19 in the deposit removal process. On the other hand, when the user has gotten out of the vehicle cabin, the user is likely to feel uncomfortable due to the noise. In view of this, the closing-to-opening interval Tα is set longer when the user is not in the vehicle cabin than when the user is in the vehicle cabin. As a result, when the closing-and-opening of the injection hole 20 of the injection valve 17 is performed by the valve element 19 through the deposit removal process, the period of time from closing of the injection hole 20 by the valve element 19 until opening of the injection hole 20 becomes longer. Consequently, it is possible to reduce noise due to the closing-and-opening of the injection hole 20 of the injection valve 17 performed by the valve element 19 through the deposit removal process. Thus, the user who has gotten out of the vehicle cabin is less likely to feel uncomfortable due to the noise.

### Other Embodiments

Each of the above-described embodiments may be modified, for example, as follows: As an example of the state where a command to stop the internal combustion engine 1 is issued, the state where an operation of turning off the ignition switch 36 is performed is described in the foregoing embodiment. However, when a vehicle includes an internal combustion engine configured to automatically stop and restart under some travelling states, the state where a command to stop the internal combustion engine is issued may be the state where a condition for automatically stopping the internal combustion engine is satisfied.

In a vehicle in which a command to stop an internal combustion engine is issued when an operation of turning off the ignition switch 36 is performed and a command to stop the internal combustion engine is issued when the condition of automatically stopping the internal combustion engine is satisfied, the closing-to-opening interval Tα may be variably set based on a determination as to whether a user is in the vehicle cabin, which is made as follows: in a case where a command to stop the internal combustion engine is issued in response to an operation of turning off the ignition switch 36, the electronic control unit 21 determines that the user is not in the vehicle cabin when a prescribed period of time has elapsed after the issuance of the command to stop the internal combustion engine, and then sets the closing-to-opening interval Tα to the prescribed value A1. On the other hand, in a case where a command to stop the internal combustion engine is issued upon the satisfaction of the condition for automatically stopping the internal combustion engine, the electronic control unit 21 determines that the user is in the vehicle cabin, and then sets the closing-to-opening interval Tα to the prescribed value A2.

The number Tsq of times of the closing-and-opening may be calculated by a prescribed expression set in advance through, for example, an experiment, that is, an expression Tsq = f(SC, QC), where the smoke cumulative value SC and the urea aqueous solution cumulative value QC are variables, instead of being calculated based on the smoke cumulative value SC and the urea aqueous solution cumulative value QC with reference to the two-dimensional map in FIG. 5.

In the foregoing embodiments, the urea aqueous solution is used as an example of a reductant. However, reductants other than a urea aqueous solution may be used.

## Claims

1. A reductant supply system,
the reductant supply system including
an injection valve (17) configured such that an injection hole (20) is opened and closed by a valve element in a form of a needle (19) to inject a reductant into an exhaust passage (8) of an internal combustion engine (1), and
a pump (16) configured to supply the reductant to the injection valve (17), and to draw the reductant back from the injection valve (17),
the reductant supply system being configured to execute purge control of drawing the reductant back from the injection valve (17) by operating the pump (16) in response to issuance of a command to stop the internal combustion engine (1),
the reductant supply system being **characterized by** comprising an electronic control unit (21) configured to:
i) operate the valve element (19) such that closing-and-opening of the injection hole (20) of the injection valve (17) is performed a prescribed number of times (Tsq) after the command to stop the internal combustion engine (1) is issued;
ii) calculate an amount of substance (SC, QC) generated during an operation of the internal combustion engine (1), the substance causing accumulation of deposits on a periphery of the injection hole (20) of the injection valve (17); and
iii) set the number of times (Tsq) that the closing-and-opening of the injection hole (20) of the injection valve (17) is performed by the valve element (19), to be larger when the amount of generated substance, calculated when the command to stop the internal combustion engine is issued, is larger.

2. The reductant supply system according to claim 1, wherein
the electronic control unit (21) is configured to:
iv) determine whether a user is in a vehicle cabin of a vehicle in which the internal combustion engine is mounted;
v) perform the closing-and-opening of the injection hole (20) by the valve element (19) the prescribed number of times (Tsq), by repeatedly performing an operation in which the injection hole (20) is opened by the valve element (19) after a period of time corresponding to a closing-to-opening interval (Tα) elapses after the injection hole (20) is closed by the valve element (19);
vi) set the closing-to-opening interval (Tα) in addition to setting the number of times that the closing-and-opening of the injection hole (20) is performed by the valve element (19); and
vii) set the closing-to-opening interval (Tα) to be longer when the electronic control unit (21) determines that the user is not in the vehicle cabin of the vehicle than when the electronic control unit (21) determines that the user is in the vehicle cabin of the vehicle.

## Patentansprüche

1. Reduktionsmittelzuführsystem,
wobei das Reduktionsmittelzuführsystem umfasst:
ein Einspritzventil (17), das derart ausgebildet ist, dass ein Einspritzloch (20) von einem Ventilelement in Form einer Nadel (19) geöffnet und geschlossen wird, um ein Reduktionsmittel in einen Abgaskanal (8) eines Verbrennungsmotors (1) einzuspritzen, und
eine Pumpe (16), die dazu ausgebildet ist, das Reduktionsmittel dem Einspritzventil (17) zuzuführen und das Reduktionsmittel von dem Einspritzventil (17) zurückzuziehen,
wobei das Reduktionsmittelzuführsystem dazu ausgebildet ist, eine Spülsteuerung des Zurückziehens des Reduktionsmittels von dem Einspritzventil (17) durch Betreiben der Pumpe (16) in Abhängigkeit von der Ausgabe eines Befehls, den Verbrennungsmotor (1) zu stoppen, auszuführen,
wobei das Reduktionsmittelzuführsystem **dadurch gekennzeichnet ist, dass** es eine elektronische Steuereinheit (21) umfasst, die dazu ausgebildet ist:
i) das Ventilelement (19) derart zu betätigen, dass Schließen und Öffnen des Einspritzlochs (20) des Einspritzventils (17) eine vorgeschriebene Anzahl von Malen (Tsq) durchgeführt wird, nachdem der Befehl, den Verbrennungsmotor (1) zu stoppen, ausgegeben wurde,
ii) eine Menge an Substanz (SC, QC) zu berechnen, die während eines Betriebs des Verbrennungsmotors (1) erzeugt wird, wobei die Substanz eine Ansammlung von Ablagerungen an einer Umgebung des Einspritzlochs (20) des Einspritzventils (17) bewirkt, und
iii) die Anzahl von Malen (Tsq), wie oft das Öffnen und Schließen des Einspritzlochs (20) des Einspritzventils (17) durch das Ventilelement (19) durchgeführt wird, größer einzustellen, wenn die Menge an erzeugter Substanz, die berechnet wird, wenn der Befehl, den Verbrennungsmotor zu stoppen, ausgegeben wird, größer ist.

2. Reduktionsmittelzuführsystem nach Anspruch 1, wobei die elektronische Steuereinheit (21) dazu ausgebildet ist:
iv) zu bestimmen, ob sich ein Benutzer in einem Fahrzeuginnenraum eines Fahrzeugs befindet, in dem der Verbrennungsmotor angebracht ist,
v) das Schließen und Öffnen des Einspritzlochs (20) durch das Ventilelement (19) die vorgegebene Anzahl von Malen (Tsq) durch wiederholtes Durchführen eines Vorgangs durchzuführen, in dem das Einspritzloch (20) durch das Ventilelement (19) geöffnet wird, nachdem ein Zeitraum, der einem Schließen-bis-Öffnen-Intervall (Tα) entspricht, abgelaufen ist, nachdem das Einspritzloch (20) durch das Ventilelement (19) geschlossen wurde,
vi) das Schließen-bis-Öffnen-Intervall (Tα) zusätzlich zu dem Einstellen der Anzahl von Malen, wie oft das Schließen und Öffnen des Einspritzlochs (20) durch das Ventilelement (19) durchgeführt wird, einzustellen, und
vii) das Schließen-bis-Öffnen-Intervall (Tα) derart einzustellen, dass es, wenn die elektronische Steuereinheit (21) bestimmt, dass sich der Benutzer nicht in dem Fahrzeuginnenraum des Fahrzeugs befindet, länger ist als wenn die elektronische Steuereinheit (21) bestimmt, dass sich der Benutzer in dem Fahrzeuginnenraum des Fahrzeugs befindet.

## Revendications

1. Circuit d'alimentation en agent réducteur,
le circuit d'alimentation en agent réducteur comprenant
une vanne d'injection (17) configurée de telle sorte qu'un trou d'injection (20) est ouvert et fermé par un élément de vanne en forme d'aiguille (19) pour injecter un agent réducteur dans un passage d'échappement (8) d'un moteur à combustion interne (1), et
une pompe (16) configurée pour délivrer l'agent réducteur à la vanne d'injection (17), et pour retirer l'agent réducteur de la vanne d'injection (17),
le circuit d'alimentation en agent réducteur étant configuré pour exécuter une commande de purge de retrait de l'agent réducteur de la vanne d'injection (17) en actionnant la pompe (16) en réponse à l'émission d'une commande d'arrêt du moteur à combustion interne (1),
le circuit d'alimentation en agent réducteur étant **caractérisé en ce qu'**il comporte une unité de commande électronique (21) configurée pour :
i) actionner l'élément de vanne (19) de telle sorte qu'une fermeture-et-ouverture du trou d'injection (20) de la vanne d'injection (17) est réalisée un nombre prescrit de fois (Tsq) après que la commande d'arrêt du moteur à combustion interne (1) soit émise ;
ii) calculer une quantité de substance (SC, QC) générée pendant un fonctionnement du moteur à combustion interne (1), la substance provoquant une accumulation de dépôts sur une périphérie du trou d'injection (20) de la vanne d'injection (17) ; et
iii) établir le nombre de fois (Tsq) que la fermeture-et-ouverture du trou d'injection (20) de la vanne d'injection (17) est réalisée par l'élément de vanne (19), pour être plus grand quand la quantité de substance générée, calculée quand la commande d'arrêt du moteur à combustion interne est émise, est plus grande.

2. Circuit d'alimentation en agent réducteur selon la revendication 1, dans lequel
l'unité de commande électronique (21) est configurée pour :
iv) déterminer si un utilisateur est dans une cabine de véhicule d'un véhicule dans lequel le moteur à combustion interne est monté ;
v) réaliser la fermeture-et-ouverture du trou d'injection (20) par l'élément de vanne (19) le nombre prescrit de fois (Tsq), en réalisant de manière répétée une opération dans laquelle le trou d'injection (20) est ouvert par l'élément de vanne (19) après qu'une durée correspondant à un intervalle de fermeture-à-ouverture (Tα) une fois que le trou d'injection (20) est fermé par l'élément de vanne (19) ;
vi) établir l'intervalle de fermeture-à-ouverture (Tα) en plus d'établir le nombre de fois que la fermeture-et-ouverture du trou d'injection (20) est réalisée par l'élément de vanne (19) ; et
vii) établir l'intervalle de fermeture-à-ouverture (Tα) pour être plus long quand l'unité de commande électronique (21) détermine que l'utilisateur n'est pas dans la cabine de véhicule du véhicule que quand l'unité de commande électronique (21) détermine que l'utilisateur est dans la cabine de véhicule du véhicule.
